# FASCICULE DE BREVET EUROPEEN

(11) **EP 2 677 805 B1**
(45) Date de publication et mention de la délivrance du brevet: **04.03.2015**
(21) Numéro de dépôt: 13170263.1
(22) Date de dépôt: 03.06.2013
(51) Int. Cl.: H04W 28/16, H04W 84/18

(54) **Dispositif et procédé de gestion de répartition de bande passante entre données sous forme de circuits et données sous forme de paquets**
Steuerungsvorrichtung und -verfahren zur Aufteilung der Bandbreite auf Daten in Form von Schaltkreisen und Daten in Form von Paketen
Device and method for managing bandwidth distribution between data in circuit form and data in packet form

(30) Priorité: 19.06.2012 FR 1255704
(43) Date de publication de la demande: 25.12.2013
(73) Titulaire: SAGEMCOM ENERGY & TELECOM SAS, 92500 Rueil-Malmaison (FR)
(72) Inventeur: Teboulle, Henri, 92500 Rueil Malmaison (FR)
(74) Mandataire: Maillet, Alain

(56) Documents cités:
- US-A1- 2002 051 462
- US-A1- 2003 112 784

## Description

La présente invention concerne la gestion d'une répartition de bande passante entre des données sous forme de circuits et des données sous forme de paquets, transmises sur un support commun à bande passante fixe.

La commutation de circuits est une méthode de mise en oeuvre d'un réseau de télécommunications dans lequel deux noeuds du réseau établissent un canal dédié de communication, appelé *circuit,* pendant une session de communication. Le circuit garantit l'affectation de la bande passante au canal établi et reste connecté pendant la durée de la session de communication. Cette approche a été particulièrement utilisée pour les infrastructures de réseau téléphonique. On notera par exemple les circuits de type E1 défini par les normes ITU-T G.703 et G.704. On pourrait aussi citer les circuits définis dans les recommandations ITU-T V.11.

La commutation de paquets diffère de la commutation de circuits en ce qu'elle divise les données à transmettre en paquets indépendants. En commutation de paquets, les paquets sont gérés par file d'attente et de manière asynchrone, ce qui résulte en des latences de transmission et des débits variables, contrairement à la commutation de circuits qui repose sur des latences de transmission et des débits constants. On notera par exemple les paquets de type Ethernet. On pourrait citer aussi les paquets de type Frame Relay ou HDLC (« High-Level Data Link Control » en anglais).

Il existe des infrastructures supportant ces deux types de transmission de données, notamment dans le monde de la téléphonie, où au moins une partie des données voix transmises par commutation de circuits coexistent avec des données utilisateur transmises par commutation de paquets. Ainsi, des équipements de telles infrastructures disposent d'interfaces adaptées à recevoir et/ou transmettre des données sous forme de circuits, et des interfaces adaptées à recevoir et/ou transmettre des données sous forme de paquets. Ces équipements permettent la transmission, dans une bande passante fixe pendant une période donnée, de trames comportant à la fois ces données sous forme de circuits et ces données sous forme de paquets.

De par leur nature, les données sous forme de circuits nécessitent une réservation de bande passante qui leur est attribuée de manière permanente. Cette bande passante est consommée même si les données sous forme de circuits sont sans signification. Les besoins en termes de débit de données effectives sous forme de circuits et de débit des données sous forme de paquets évoluent dans le temps, et la répartition de bande passante pour la transmission de ces données sur un support (« medium » en anglais) commun doit évoluer en conséquence. Par exemple, il peut s'avérer nécessaire pour un opérateur d'un réseau téléphonique de réduire, ou d'augmenter, la part de bande passante dévouée à la transmission de données sous forme de circuits par rapport à celle laissée disponible pour la transmission de données sous forme de paquets. Pour ce faire, les techniques actuelles nécessitent d'interrompre, le temps de la reconfiguration des équipements, les services de communication offerts par le réseau. Outre l'indisponibilité des services, cette opération peut entraîner une perte de données, puisqu'au moment où l'interruption a lieu, des communications peuvent être en cours. Pour éviter l'indisponibilité des services et des pertes de données, beaucoup d'opérateurs préfèrent réserver de manière préventive toute la bande passante nécessaire à la transmission des données sous forme de circuits pour toute la vie du réseau.

On peut noter la demande de brevet publiée sous la référence US 2003/112784 A1, qui traite d'une gestion dynamique de qualité de service dans le cadre de transmissions de voix et de données dans des réseaux de communication de type CDMA (« Code Division Multiple Access » en anglais). On peut aussi noter la demande de brevet publiée sous la référence US 2002/051462 A1, qui traite d'allouer de manière flexible des ressources d'un réseau de type CDMA entre des canaux adaptés à la commutation de paquets et des canaux adaptés à la commutation de circuits.

Il est souhaitable de pallier ces différents inconvénients de l'état de la technique.

Il est notamment souhaitable de fournir une solution qui permette de modifier dynamiquement la répartition de bande passante sur un medium entre données sous forme de circuits et données sous forme de paquets, de manière à améliorer l'utilisation de cette bande passante.

Il est notamment souhaitable de fournir une solution qui permette d'effectuer une telle modification dynamique sans perte de données (« hitless » en anglais) ni rupture de service.

Il est notamment souhaitable de fournir une solution qui permette d'effectuer une telle modification dynamique de manière automatique.

L'invention concerne un procédé de gestion de répartition de bande passante sur un support de transmission entre des données sous forme de circuits et des données sous forme de paquets, une unité de traitement fournissant lesdites données sous forme de circuits à un modem gérant les transmissions sur ledit support et étant dynamiquement configurable pour mettre en oeuvre sur ledit support un schéma de mise en trame, de multiplexage, de codage et de modulation adapté à des conditions de transmission. Le procédé est tel que l'unité de traitement effectue les étapes suivantes : détection d'un changement de configuration au niveau d'au moins une interface d'échange de données sous forme de circuits ; insertion dans une trame, concaténant lesdites données sous forme de circuits et à destination du modem, une information de signalisation représentative d'une demande de changement de répartition de bande passante entre lesdites données sous forme de circuits et lesdites données sous forme de paquets ; et, sur réception d'une réponse positive à ladite demande : reconfiguration du modem en conservant le schéma de codage et de modulation et en déclarant un débit de données sous forme de circuits défini en fonction dudit changement de configuration détecté. Ainsi, l'unité de traitement assure par signalisation au sein des données sous forme de circuits qu'elle peut effectuer la modification de répartition de bande passante et détourne une commande de changement de configuration du modem (mode ACM pour « Adaptive Coding and Modulation » en anglais), qui vise à dynamiquement définir le schéma de mise en trame, de multiplexage, de codage et de modulation en fonction de conditions de transmission, afin de faire appliquer la nouvelle répartition de bande passante.

Selon un mode de réalisation particulier, ladite détection d'un changement de configuration consiste à détecter un arrêt ou un début d'activité dans au moins un circuit de données reçu via ladite interface. Ainsi, la mise en oeuvre est automatique.

Selon un mode de réalisation particulier, ladite détection d'un changement de configuration consiste à recevoir d'un configurateur une nouvelle configuration à appliquer. Ainsi, la mise en oeuvre peut être contrôlée.

Selon un mode de réalisation particulier, sur réception d'une réponse négative à ladite demande, l'unité de traitement effectue les étapes suivantes : activation d'une temporisation aléatoire ; réitération de ladite insertion de l'information de signalisation, lorsque ladite temporisation est écoulée sans qu'une demande de changement de répartition de bande passante entre lesdites données sous forme de circuits et lesdites données sous forme de paquets n'ait été reçue suite à ladite réponse négative. Ainsi, des demandes concurrentes peuvent être gérées.

Selon un mode de réalisation particulier, l'unité de traitement effectue les étapes suivantes : réception d'une information, en provenance dudit modem, représentative d'un instant auquel ledit modem prend en compte ladite reconfiguration ; application d'un nouveau schéma de trame pour la concaténation des données sous forme de circuits, en fonction dudit instant auquel ledit modem prend en compte ladite reconfiguration. Ainsi, le basculement de configuration se fait de manière synchronisée sur les dispositifs de communication concernés.

Selon un mode de réalisation particulier, l'unité de traitement effectue l'étape suivante : configuration d'une taille de mémoire tampon par laquelle transitent les données sous forme de circuits, à partir d'une table de correspondance entre schéma de mise en trame, de multiplexage, de codage et de modulation appliqué et taille de mémoire tampon, afin d'assurer que lesdites données transitent selon une latence prédéterminée. Ainsi, la latence subie par les données sous forme de circuits est maintenue.

L'invention concerne également une unité de traitement pour gérer une répartition de bande passante sur un support de transmission entre des données sous forme de circuits et des données sous forme de paquets, l'unité de traitement étant adaptée pour fournir lesdites données sous forme de circuits à un modem gérant les transmissions sur ledit support et étant dynamiquement configurable pour mettre en oeuvre sur ledit support un schéma de mise en trame, de multiplexage, de codage et de modulation adapté à des conditions de transmission. L'unité de traitement comporte : des moyens de détection d'un changement de configuration au niveau d'au moins une interface d'échange de données sous forme de circuits ; des moyens d'insertion dans une trame, concaténant lesdites données sous forme de circuits et à destination du modem, une information de signalisation représentative d'une demande de changement de répartition de bande passante entre lesdites données sous forme de circuits et lesdites données sous forme de paquets ; et, mis en oeuvre sur réception d'une réponse positive à ladite demande : des moyens de reconfiguration du modem en conservant le schéma de codage et de modulation et en déclarant un débit de données sous forme de circuits défini en fonction dudit changement de configuration détecté.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un premier exemple de système de transmission de données dans lequel l'invention peut être mise en oeuvre ;
- la Fig. 2 illustre schématiquement un second exemple de système de transmission de données dans lequel l'invention peut être mise en oeuvre ;
- la Fig. 3 illustre schématiquement un algorithme de répartition de bande passante entre données sous forme de circuits et données sous forme de paquets ;
- la Fig. 4 illustre schématiquement une trame de données sous forme de circuits.

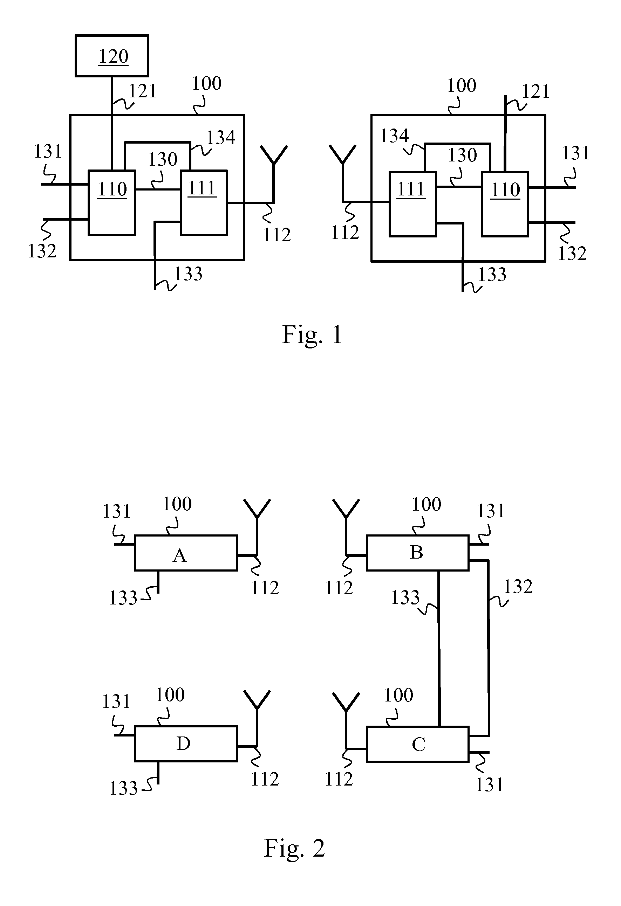

La Fig. 1 illustre schématiquement un premier exemple de système de transmission de données dans lequel l'invention peut être mise en oeuvre.

Le système de transmission de données comporte deux dispositifs de communication 100. Les dispositifs de communication 100 sont interconnectés via un support de communication. Dans un mode préférentiel de réalisation, cette interconnexion est réalisée selon une technologie de transmission de type faisceau hertzien (*microwaves* en anglais). D'autres technologies de transmission peuvent être utilisées pour réaliser cette interconnexion, comme par exemple des technologies de transmission sur fibre optique ou sur support cuivré.

Le support de communication permet d'établir un lien entre les deux dispositifs de communication 100 à bande passante fixe. L'environnement des dispositifs de communication 100 peut entraîner une modification de cette bande passante, mais après adaptation du schéma de mise en trame, de multiplexage, de codage et de modulation pour prendre en compte cette modification des conditions de transmission, la bande passante offerte par le support de communication est fixe.

Chaque dispositif de communication 100 comporte un modem 111 et une unité 110 de traitement de données sous forme de circuits. Dans le cadre d'une transmission de type faisceau hertzien, le modem 111 est connecté à une antenne 112.

Chaque dispositif de communication 100 comporte en outre une première interface 131 adaptée pour échanger des données sous forme de circuits, par exemple de type E1, avec des équipements externes (non représentés) au système de transmission, à partir desquels les données sous forme de circuits sont collectées et/ou auxquels les données sous forme de circuits sont délivrées.

Chaque dispositif de communication 100 comporte en outre une seconde interface 132 adaptée pour échanger des données sous forme de circuits, par exemple de type E3 tel que défini par les normes ITU-T G.703 et G.704, avec un autre dispositif de communication 100, à partir duquel les données sous forme de circuits sont collectées et/ou auquel les données sous forme de circuits sont délivrées. Une mise en oeuvre d'interconnexion de dispositifs de communication 100 par le biais de cette seconde interface 132 est illustrée ci-après en relation avec la Fig. 2.

Chaque dispositif de communication 100 comporte en outre une troisième interface 133 adaptée pour échanger des données sous forme de paquets, par exemple de type Ethernet, avec des équipements externes (non représentés) au système de transmission, à partir desquels les données sous forme de paquets sont collectées et/ou auxquels les données sous forme de paquets sont délivrées.

Chaque dispositif de communication 100 peut comporter plusieurs de ces première, seconde et/ou troisième interfaces, potentiellement selon des formats de données distincts.

Chaque dispositif de communication 100 comporte en outre une quatrième interface 121 adaptée pour connecter un dispositif configurateur 120 permettant de configurer l'unité de traitement 110 et le modem 111 dans le cadre de la gestion de la répartition de bande passante entre données sous forme de circuits et données sous forme de paquets sur le support de communication entre les deux dispositifs de communication 100.

L'unité de traitement 110 est adaptée pour recevoir des données sous forme de circuits en provenance de la première interface 131 et/ou de la seconde interface 132. L'unité de traitement 110 est adaptée pour créer des trames GPI (« Generic Protocol Interface » en anglais) à partir de ces données sous forme de circuits, et les transmettre au modem 111 via un lien 130. L'unité de traitement 110 est adaptée pour recevoir des trames GPI, via le lien 130, en provenance du modem 111 et pour extraire les données sous forme de circuits des trames GPI reçues. L'unité de traitement 110 est adaptée pour transmettre ces données extraites via la première interface 131 et/ou la seconde interface 132.

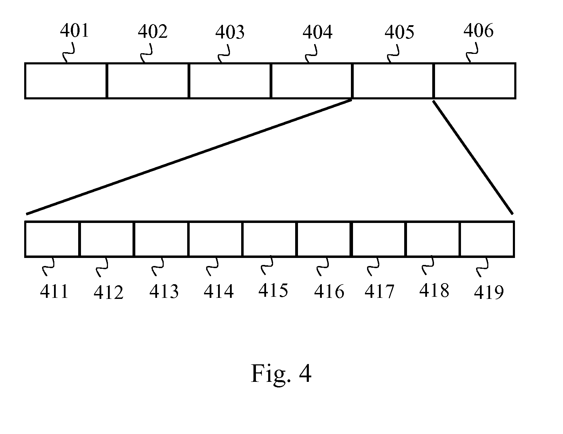

Un exemple d'une telle trame GPI est représenté schématiquement sur la Fig. 4. Dans cet exemple, la trame GPI comporte quatre ensemble de données de type E3 401, 402, 403, correspondant aux données sous forme de circuits échangées via la seconde interface 132. Il est rappelé que chaque E3 comporte un ensemble de seize E1. La trame GPI comporte en outre un champ PDH (« Plesiochronous Digital Hierarchy » en anglais) 405 correspondant aux données sous forme de circuits échangées via la première interface 131, et un champ de signalisation 406. La trame GPI peut comporter d'autres champs, non représentés ici.

Le champ PDH 405 comporte un champ 411 indiquant si, et dans quelle mesure, des bits de justifications 419 sont présents dans le champ PDH 405. Ces bits de justification (« padding bits » en anglais) sont utilisés pour s'adapter au plésiochronisme des E1 transportés par la trame GPI. Le champ PDH 405 comporte en outre quatre ensemble de données de type E1 412, 413, 414, 415, ainsi que trois ensembles de données de type E2 416, 417, 418. Il est rappelé que, selon les normes ITU-T G.703 et G.704, chaque E2 comporte un ensemble de quatre E1. Le champ PDH 405 comporte donc seize ensembles de données de type E1.

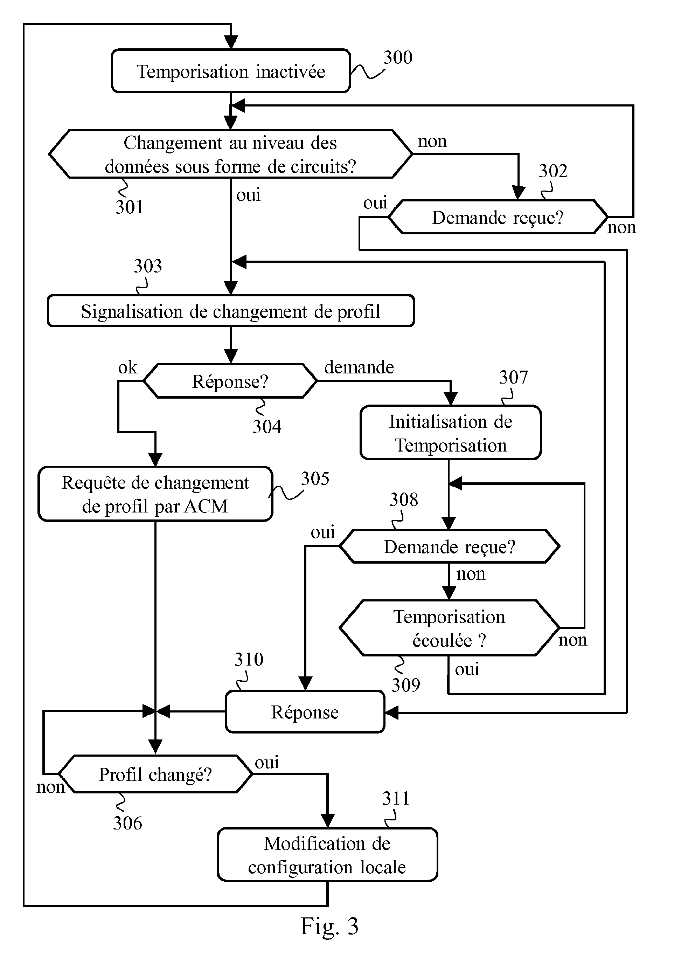

La trame GPI représentée schématiquement sur la Fig. 4 comporte ainsi quatre-vingt ensembles de données de type E1. La trame GPI, telle que fournie par l'unité de traitement 110 au modem 111, ou fournie par le modem 111 à l'unité de traitement 110, peut comporter plus ou moins d'ensembles élémentaires de données E1, en fonction de la répartition de bande passante entre données sous forme de circuits et données sous forme de paquets, et sa structure change donc selon le nombre d'ensembles élémentaires de données de type E1 à transporter. Cet aspect est détaillé ci-après en relation avec la Fig. 3.

De retour à la Fig. 1, le modem 111 est adapté pour échanger des trames GPI avec l'unité de traitement 110, et pour échanger des données sous forme de paquets avec la troisième interface 133. Le modem 111 est adapté pour encapsuler les données sous forme de paquets selon la procédure GFP (« Generic Framing Procedure » en anglais). Le modem 111 est adapté pour former des trames à partir de ces données sous forme de circuits fournies par l'unité de traitement 110 et à partir de ces données sous forme de paquets, selon une répartition de bande passante configurée par l'unité de traitement. La trame, ainsi formée par le modem 111, comporte une portion correspondant à la trame GPI fournie par l'unité de traitement 110 et une portion correspondant à la trame GFP formée à partir des données sous forme de paquets. Le modem 111 est aussi adapté pour effectuer les opérations inverses, à savoir extraire la trame GPI et la trame GFP à partir d'une trame reçue d'un autre dispositif de communication 100, dés-encapsuler les données sous forme de paquets pour les fournir à la troisième interface 133 et fournir la trame GPI à l'unité de traitement 110. Cet aspect est aussi détaillé ci-après en relation avec la Fig. 3.

Le modem 111 est en outre adapté pour permettre à l'unité de traitement 110 de configurer dynamiquement un profil de schéma de mise en trame, de multiplexage, de codage et de modulation. Cette fonctionnalité permet classiquement d'adapter dynamiquement le schéma de mise en trame, de multiplexage, de codage et de modulation aux conditions de transmission entre les dispositifs de communication 100. Préférentiellement, cette configuration s'applique de manière symétrique entre les modems des deux dispositifs de communication 100. Par exemple, cela permet à un opérateur de réseau téléphonique d'augmenter la robustesse des transmissions entre les dispositifs de communication 100, impliquant une réduction de la bande passante disponible, dans des zones géographiques à tendance orageuse. En définissant le schéma de mise en trame, de multiplexage, de codage et de modulation, l'unité de traitement 110 définit le débit des données transférées via le lien 130 et dont la bande passante allouée doit être garantie entre les dispositifs de communication 100.

Le modem 111 est aussi connecté à l'unité de traitement 110 par le biais d'un lien 134, par exemple mis en oeuvre sous la forme d'un bus I²C (« Inter-Integrated Circuit » en anglais). Ce lien 134 est utilisé par le modem 111 pour fournir à l'unité de traitement 110 des informations de signalisation et de synchronisation concernant le schéma de mise en trame, de multiplexage, de codage et de modulation utilisé entre les dispositifs de communication 100. Cet aspect est aussi détaillé ci-après en relation avec la Fig. 3.

Les configurations des unités de traitement 110 permettent de définir si des données reçues, par exemple pour chaque E1, par la première interface 131 doivent être aiguillées vers la seconde interface 132 ou vers le modem 111. Les configurations des unités de traitement 110 permettent aussi de définir si des données reçues, par exemple pour chaque ensemble élémentaire de type E1, par la seconde interface 132 doivent être aiguillées vers la première interface 131 ou vers le modem 111. Les configurations des unités de traitement 110 permettent aussi de définir si des données reçues, par exemple pour chaque ensemble élémentaire de type E1, du modem 111 doivent être aiguillées vers la première interface 131 ou vers la seconde interface 132.

Le comportement de l'unité de traitement 110, tel que décrit dans ce document, peut être mis en oeuvre sous forme logicielle par exécution d'un ensemble d'instructions par une machine programmable, tel qu'un DSP (« Digital Signal Processor » en anglais) ou un microcontrôleur, et/ou être implémenté sous forme matérielle par une machine, un circuit intégré ou un composant dédié, tel qu'un FPGA (« Field-Programmable Gate Array » en anglais) ou un ASIC (« Application-Specific Integrated Circuit » en anglais).

Lorsque ledit comportement est mis en oeuvre sous forme logicielle, l'unité de traitement 110 comprend alors, reliés par un bus de communication : un processeur ou CPU (« Central Processing Unit » en anglais) ; une mémoire vive RAM (« Random Access Memory » en anglais) ; une mémoire morte ROM (« Read Only Memory » en anglais), ou une mémoire Flash; une unité de stockage ou un lecteur de support de stockage, tel qu'un disque dur HDD (« Hard Disk Drive » en anglais). Le CPU est capable d'exécuter des instructions chargées dans la RAM à partir de la ROM, d'une mémoire externe (non représentée), d'un support de stockage, tel que le disque dur HDD, ou d'un réseau de communication. Lorsque l'unité de traitement 110 est mise sous tension, le processeur est capable de lire de la RAM des instructions et de les exécuter. Ces instructions forment un programme d'ordinateur causant la mise en oeuvre, par le processeur, dudit comportement.

La Fig. 2 illustre schématiquement un second exemple de système de transmission de données dans lequel l'invention peut être mise en oeuvre.

Un premier dispositif de communication 100, tel que précédemment décrit et marqué A, est connecté à un second dispositif de communication 100, marqué B. L'interconnexion des dispositifs de communication A et B est mise en oeuvre via leurs modems 111 respectifs.

De la même manière, un troisième dispositif de communication 100, marqué C, est connecté à un quatrième dispositif de communication 100, marqué D. L'interconnexion des dispositifs de communication C et D est aussi mise en oeuvre via leurs modems 111 respectifs.

Le second dispositif de communication B est interconnecté au dispositif de communication C via leurs secondes interfaces respectives 132, et via leurs troisièmes interfaces respectives 133. Des données sous forme de circuits peuvent ainsi être échangées entre les dispositifs de communication B et C, via leurs secondes interfaces respectives 132, et des données sous forme de paquets peuvent ainsi être échangées entre les dispositifs de communication B et C, via leurs troisièmes interfaces respectives 133. Cela permet de propager des données sous forme de circuits et des données sous forme de paquets dans l'ensemble du système de transmission. De manière illustrative, des données injectées au niveau du dispositif de communication A peuvent ainsi être délivrées par le dispositif de communication B, mais aussi par les dispositifs de communication C et D.

Il convient de noter qu'au moins un dispositif destiné à traiter et/ou à commuter les données sous forme de paquets, tel qu'un commutateur Ethernet, peut être placé entre les troisièmes interfaces respectives des dispositifs de communication B et C.

La Fig. 3 illustre schématiquement un algorithme, mis en oeuvre par l'unité de traitement 110, de répartition de bande passante entre données sous forme de circuits et données sous forme de paquets.

Dans une étape 300, une temporisation T, utilisée par la suite, est inactivée.

Dans une étape 301 suivante, l'unité de traitement 110 vérifie si un changement de configuration au niveau des données sous forme de circuits est détecté.

Selon un premier mode de réalisation, ce changement est indiqué par le configurateur 120 qui notifie à l'unité de traitement 110 quels circuits parmi ceux échangés via la première interface 131 et/ou la seconde interface 132 sont à maintenir et/ou à ajouter et/ou à supprimer. La trame GPI formée ou reçue par l'unité de traitement doit évoluer en conséquence.

Selon un second mode de réalisation, ce changement est détecté par l'unité de traitement 110 lorsqu'un ou plusieurs circuits reçus via la première interface 131 et/ou la seconde interface 132 deviennent actifs, ou inactifs. En effet, lorsqu'il ne transporte pas de données effectives, un circuit transporte des données appelées AIS (« Alarm Indication Signal » en anglais ou « Signal d'Indication d'Alarme » en français) afin de maintenir un débit constant. Par exemple, cela correspond à l'ensemble des bits du circuit mis à 1. L'unité de traitement 110 peut donc détecter le passage d'actif à inactif, ou d'inactif à actif, d'un circuit. Cette approche peut nécessiter la désencapsulation de données au format E1 lorsque celles-ci sont encapsulées dans un format E3 ou E2.

Ce second mode de réalisation permet une détection automatique du besoin de modifier la répartition de bande passante, ce qui permet d'automatiquement propager la reconfiguration des dispositifs de communication 100 lorsqu'ils sont chaînés comme illustré par la Fig. 2.

Si un tel changement est détecté, une étape 303 est effectuée ; sinon une étape 302 est effectuée.

Dans l'étape 302, l'unité de traitement 110 vérifie si une demande de changement de répartition de bande passante est reçue en provenance de l'autre dispositif de communication 100, accessible via le modem 111. Une telle demande est indiquée dans le champ de signalisation 406 de la trame GPI fournie par le modem 111. Si une telle demande est détectée, une étape 310 est effectuée ; sinon l'étape 301 est réitérée.

Dans l'étape 303, l'unité de traitement 110 insère dans la prochaine trame GPI que l'unité de traitement 110 construit, ou une trame GPI ultérieure, une demande de changement de répartition de bande passante. Cette demande est inscrite dans le champ de signalisation 406 de la trame GPI fournie au modem 111.

Dans une étape 304 suivante, l'unité de traitement 110 vérifie si une réponse est reçue de l'unité de traitement 110 de l'autre dispositif de communication 100, accessible via le modem 111. Une telle réponse est inscrite dans le champ de signalisation 406 d'une trame GPI fournie par le modem 111. Si la réponse correspond à un accord, une étape 305 est effectuée. Si la réponse indique que l'unité de traitement 110 de l'autre dispositif de communication 100 souhaite aussi faire une demande de changement de répartition de bande passante, en d'autres termes si la réponse est négative, il est alors nécessaire pour les unités de traitement 110 des deux dispositifs de communication 100 de définir laquelle est maître et laquelle est esclave ; une étape 307 est alors effectuée.

Dans l'étape 305, l'unité de traitement 110 se place comme maître dans la mise en place du changement de répartition de bande passante. L'unité de traitement 110 demande au modem 111 de modifier le profil du schéma de mise en trame, de multiplexage, sans modifier le codage ni la modulation, de la transmission entre les deux dispositifs de communication 100, afin de prendre en compte la modification de répartition de bande passante entre données sous forme de circuits et données sous forme de paquets. L'unité de traitement 110 détourne l'utilisation classique du mode ACM de changement configuration du modem 111, qui permet de modifier dynamiquement le schéma de mise en trame, de multiplexage, de codage et de modulation. L'unité de traitement 110 configure le modem 111 de sorte que le schéma de mise en trame et de multiplexage soit modifié, et le schéma de codage et de modulation précédent soit conservé et en mettant à jour le débit de données transférées via le lien 130. Cela entraîne une modification de la répartition de bande passante entre données sous forme de circuits et données sous forme de paquets, la bande passante entre les deux dispositifs de communication 100 restant fixe.

Le fonctionnement classique du mode ACM permet de changer le codage et la modulation du modem de manière à s'adapter aux conditions de transmission. Ce changement s'effectue sans erreur au niveau des données transportées. A titre d'exemple, en transmission radio de type Faisceau Hertzien, lors d'un orage, le mode ACM permet d'augmenter l'immunité aux perturbations consécutives à cet orage en diminuant le débit de transmission, associé à un codage et une modulation à plus faible débit. Dans ce cas, le débit des données sous forme de circuits transportés par la trame radio reste inchangé, alors que le débit des données sous forme de paquets diminue. Ce mode ACM comporte aussi des paramètres de répartition de bande passante permettant de définir dynamiquement d'une part le volume de données sous forme de circuits transportés, et d'autre part la bande passante laissée disponible pour les données sous forme de paquets, dans la trame radio. L'utilisation de ce mode ACM est détournée dans la mesure où on interdit paradoxalement tout changement de codage et de modulation et on modifie dynamiquement le débit des données sous forme de circuits, et la bande passante laissée disponible aux données sous forme de paquets, à bande passante radio constante. Il convient de noter que l'unité de traitement 110 pourrait ne paramétrer que le schéma de codage et de modulation, et l'un parmi le débit des données sous forme de circuits et la bande passante laissée disponible aux données sous forme de paquets, l'autre étant déduit par le modem 111, la bande passante étant fixe à codage et modulation figés.

Dans une étape 306 suivante, l'unité de traitement 110 vérifie si le profil de schéma de mise en trame et de multiplexage a effectivement changé. Cette indication est fournie par le modem 111 via le lien 134. Si tel est le cas, une étape 311 est effectuée ; sinon, l'étape 306 est réitérée.

Dans l'étape 307, l'unité de traitement 110 initialise la temporisation T à une valeur aléatoire bornée.

Dans une étape 308 suivante, l'unité de traitement 110 vérifie si une demande de changement de répartition de bande passante est effectivement reçue en provenance de l'unité de traitement 110 de l'autre dispositif de communication 100, accessible via le modem 111. Une telle demande est indiquée dans le champ de signalisation 406 de la trame GPI fournie par le modem 111. Si une telle demande est détectée, l'étape 310 est effectuée ; sinon, une étape 309 est effectuée dans laquelle l'unité de traitement 110 vérifie si la temporisation T est écoulée. Si tel est le cas, l'étape 303 est réitérée ; sinon, l'étape 308 est réitérée.

Dans l'étape 310, l'unité de traitement 110 transmet une réponse, correspondant à un accord, à l'unité de traitement 110 de l'autre dispositif de communication 100, accessible via le modem 111. Une telle réponse est indiquée dans le champ de signalisation 406 de la trame GPI fournie au modem 111. L'unité de traitement 110 se place donc comme esclave dans la mise en place du changement de répartition de bande passante. L'étape 306 est alors effectuée.

Dans l'étape 311, l'unité de traitement 110 modifie sa propre configuration locale pour prendre en compte le changement de configuration au niveau des données sous forme de circuits. L'unité de traitement 110 doit se configurer pour créer, à l'émission, des trames GPI avec le débit approprié de données sous forme de circuits. L'unité de traitement 110 doit se configurer pour traiter, à la réception, de telles trames GPI. Suite à l'étape 311, l'étape 300 est réitérée.

Ce basculement de configuration est avantageusement synchronisé entre les deux dispositifs de communication 100, afin que leurs unités de traitement 110 appliquent le changement de configuration au même moment, grâce à l'information de signalisation et de synchronisation véhiculée via le lien 134.

Lorsqu'un changement de profil de schéma de mise en trame, de multiplexage, de codage et de modulation est effectué par le modem 111, celui-ci prévient auparavant, via le lien 134, l'unité de traitement 110 que ce changement va avoir lieu. L'information fournie par le modem 111 à l'unité de traitement 110 est donc représentative d'un instant auquel ce changement de profil va être mis en place entre les modems 111 des deux dispositifs de communication 100. L'unité de traitement 110 sait alors exactement à quel moment la nouvelle structure de trame GPI est mise en place, et donc effectuer le changement de configuration au moment approprié, pour que ce changement soit synchronisé sur les deux dispositifs de communication 100.

Avantageusement, l'unité de traitement 110 compense le changement de temps de latence lié au changement de profil effectué par le modem 111. Lorsqu'un changement de profil de schéma de mise en trame, de multiplexage, de codage et de modulation a lieu, cela modifie le débit des données, ainsi que la structure de la trame GPI, au niveau du lien 130. Le temps de transfert des trames GPI entre l'interface avec le lien 130 du modem 111 côté émission et l'interface avec le lien 130 du modem 111 côté réception change. Cette compensation peut être mise en oeuvre à l'émission et/ou à la réception des trames GPI.

Pour effectuer cette compensation, dans un mode de réalisation particulier, l'unité de traitement 110 modifie la taille d'une mémoire tampon de type FIFO (« First-In First-Out » en anglais) dans laquelle les données sous forme de circuits sont stockées avant d'être propagées par l'unité de traitement 110. L'unité de traitement 110 dispose d'une table LUT (« Look-Up Table» en anglais) mettant en correspondance taille de mémoire tampon et profil de schéma de mise en trame, de multiplexage, de codage et de modulation mis en oeuvre par le modem 111. Adapter ainsi la taille de cette mémoire tampon permet d'effectuer un changement de configuration sans perte de données ni interruption de service.

## Revendications

1. Procédé de gestion de répartition de bande passante sur un support de transmission entre des données sous forme de circuits et des données sous forme de paquets, une unité de traitement (110) fournissant lesdites données sous forme de circuits à un modem (111) gérant les transmissions sur ledit support et étant dynamiquement configurable pour mettre en oeuvre sur ledit support un schéma de mise en trame, de multiplexage, de codage et de modulation adapté à des conditions de transmission, **caractérisé en ce que** l'unité de traitement effectue les étapes suivantes :
- détection (301) d'un changement de configuration au niveau d'au moins une interface d'échange de données sous forme de circuits ;
- insertion (303) dans une trame, concaténant lesdites données sous forme de circuits et à destination du modem, une information de signalisation représentative d'une demande de changement de répartition de bande passante entre lesdites données sous forme de circuits et lesdites données sous forme de paquets ;
et, sur réception (304) d'une réponse positive à ladite demande :
- reconfiguration (305) du modem en conservant le schéma de codage et de modulation et en déclarant un débit de données sous forme de circuits défini en fonction dudit changement de configuration détecté.

2. Procédé selon la revendication 1, **caractérisé en ce que** ladite détection d'un changement de configuration consiste à détecter un arrêt ou un début d'activité dans au moins un circuit de données reçu via ladite interface.

3. Procédé selon la revendication 1, **caractérisé en ce que** ladite détection d'un changement de configuration consiste à recevoir d'un configurateur une nouvelle configuration à appliquer.

4. Procédé selon l'une quelconque des revendications 1 à 3, **caractérisé en ce que**, sur réception d'une réponse négative à ladite demande, l'unité de traitement effectue les étapes suivantes :
- activation (307) d'une temporisation aléatoire ;
- réitération (303) de ladite insertion de l'information de signalisation, lorsque ladite temporisation est écoulée sans qu'une demande de changement de répartition de bande passante entre lesdites données sous forme de circuits et lesdites données sous forme de paquets n'ait été reçue suite à ladite réponse négative.

5. Procédé selon l'une quelconque des revendications 1 à 4, **caractérisé en ce que** l'unité de traitement effectue les étapes suivantes :
- réception d'une information, en provenance dudit modem, représentative d'un instant auquel ledit modem prend en compte ladite reconfiguration ;
- application d'un nouveau schéma de trame pour la concaténation des données sous forme de circuits, en fonction dudit instant auquel ledit modem prend en compte ladite reconfiguration.

6. Procédé selon l'une quelconque des revendications 1 à 4, **caractérisé en ce que** l'unité de traitement effectue l'étape suivante :
- configuration d'une taille de mémoire tampon par laquelle transitent les données sous forme de circuits, à partir d'une table de correspondance entre schéma de mise en trame, de multiplexage, de codage et de modulation appliqué et taille de mémoire tampon, afin d'assurer que lesdites données transitent selon une latence prédéterminée.

7. Programme d'ordinateur, **caractérisé en ce qu'**il comprend des instructions pour mettre en oeuvre, par une unité de traitement, le procédé selon l'une quelconque des revendications 1 à 6, lorsque ledit programme est exécuté par un processeur de ladite unité de traitement.

8. Moyens de stockage, **caractérisés en ce qu'**ils stockent un programme d'ordinateur comprenant des instructions pour mettre en oeuvre, par une unité de traitement, le procédé selon l'une quelconque des revendications 1 à 6, lorsque ledit programme est exécuté par un processeur de ladite unité de traitement.

9. Unité de traitement (110) pour gérer une répartition de bande passante sur un support de transmission entre des données sous forme de circuits et des données sous forme de paquets, l'unité de traitement étant adaptée pour fournir lesdites données sous forme de circuits à un modem (111) gérant les transmissions sur ledit support et étant dynamiquement configurable pour mettre en oeuvre sur ledit support un schéma de mise en trame, de multiplexage, de codage et de modulation adapté à des conditions de transmission, **caractérisé en ce que** l'unité de traitement comporte :
- des moyens de détection (301) d'un changement de configuration au niveau d'au moins une interface d'échange de données sous forme de circuits ;
- des moyens d'insertion (303) dans une trame, concaténant lesdites données sous forme de circuits et à destination du modem, d'une information de signalisation représentative d'une demande de changement de répartition de bande passante entre lesdites données sous forme de circuits et lesdites données sous forme de paquets ;
et, mis en oeuvre sur réception (304) d'une réponse positive à ladite demande :
- des moyens de reconfiguration (305) du modem en conservant le schéma de codage et de modulation et en déclarant un débit de données sous forme de circuits défini en fonction dudit changement de configuration détecté.

10. Circuit intégré, **caractérisé en ce qu'**il comporte une unité de traitement selon la revendication 9.

## Patentansprüche

1. Verfahren zur Verwaltung der Bandbreitenaufteilung auf einem Übertragungsmedium zwischen Daten in Form von Leitungen und Daten in Form von Paketen, wobei eine Verarbeitungseinheit (110) die Daten in Form von Leitungen an ein Modem (111) liefert, das die Übertragungen auf dem Medium verwaltet und dynamisch konfigurierbar ist, um auf dem Medium ein Rahmenbildungs-, Multiplex-, Codier- und Modulationsschema durchzuführen, das an Übertragungsbedingungen angepasst ist, **dadurch gekennzeichnet, dass** die Verarbeitungseinheit die folgenden Schritte ausführt:
- Erfassen (301) einer Konfigurationsänderung im Bereich mindestens einer Austauschschnittstelle von Daten in Form von Leitungen;
- Einfügen (303) in einen Rahmen, der die Daten in Form von Leitungen verkettet und für das Modem bestimmt ist, einer Signalisierungsinformation, die für eine Änderungsanforderung der Bandbreitenaufteilung zwischen den Daten in Form von Leitungen und den Daten in Form von Paketen repräsentativ ist;
und bei Empfang (304) einer positiven Antwort auf die Anforderung:
- Neukonfiguration (305) des Modems unter Beibehaltung des Codier- und Modulationsschemas und unter Angabe einer Übertragungsrate von Daten in Form von Leitungen, die abhängig von der erfassten Konfigurationsänderung definiert wird.

2. Verfahren nach Anspruch 1, **dadurch gekennzeichnet, dass** die Erfassung einer Konfigurationsänderung darin besteht, ein Beenden oder einen Anfang einer Aktivität in mindestens einer über die Schnittstelle empfangenen Datenleitung zu erfassen.

3. Verfahren nach Anspruch 1, **dadurch gekennzeichnet, dass** die Erfassung einer Konfigurationsänderung darin besteht, von einem Konfigurator eine neue anzuwendende Konfiguration zu empfangen.

4. Verfahren nach einem der Ansprüche 1 bis 3, **dadurch gekennzeichnet, dass** die Verarbeitungseinheit bei Empfang einer negativen Antwort auf die Anforderung die folgenden Schritte ausführt:
- Aktivieren (307) einer Zufallsverzögerung;
- Wiederholen (303) der Einfügung der Signalisierungsinformation, wenn die Verzögerung abgelaufen ist, ohne dass eine Änderungsanforderung der Bandbreitenaufteilung zwischen den Daten in Form von Leitungen und den Daten in Form von Paketen nach der negativen Antwort empfangen wurde.

5. Verfahren nach einem der Ansprüche 1 bis 4, **dadurch gekennzeichnet, dass** die Verarbeitungseinheit die folgenden Schritte ausführt:
- Empfang einer Information vom Modem, die für einen Zeitpunkt repräsentativ ist, zu dem das Modem die Neukonfiguration berücksichtigt;
- Anwenden eines neuen Rahmenschemas für die Verkettung der Daten in Form von Leitungen abhängig von dem Zeitpunkt, zu dem das Modem die Neukonfiguration berücksichtigt.

6. Verfahren nach einem der Ansprüche 1 bis 4, **dadurch gekennzeichnet, dass** die Verarbeitungseinheit den folgenden Schritt ausführt:
- Konfiguration einer Größe eines Pufferspeichers, den die Daten in Form von Leitungen durchlaufen, ausgehend von einer Korrespondenztabelle zwischen angewendetem Rahmenbildungs-, Multiplex-, Codier- und Modulationsschema und Pufferspeichergröße, um zu gewährleisten, dass die Daten gemäß einer vorbestimmten Latenz durchlaufen.

7. Computerprogramm, **dadurch gekennzeichnet, dass** es Anweisungen enthält, um das Verfahren nach einem der Ansprüche 1 bis 6 durch eine Verarbeitungseinheit durchzuführen, wenn das Programm von einem Prozessor der Verarbeitungseinheit ausgeführt wird.

8. Speichereinrichtungen, **dadurch gekennzeichnet, dass** sie ein Computerprogramm speichern, das Anweisungen zur Durchführung des Verfahrens nach einem der Ansprüche 1 bis 6 durch eine Verarbeitungseinheit enthält, wenn das Programm von einem Prozessor der Verarbeitungseinheit ausgeführt wird.

9. Verarbeitungseinheit (110) zur Verwaltung einer Bandbreitenaufteilung auf einem Übertragungsmedium zwischen Daten in Form von Leitungen und Daten in Form von Paketen, wobei die Verarbeitungseinheit geeignet ist, um die Daten in Form von Leitungen an ein Modem (111) zu liefern, das die Übertragungen auf dem Medium verwaltet und dynamisch konfigurierbar ist, um auf dem Medium ein Rahmenbildungs-, Multiplex-, Codier- und Modulationsschema durchzuführen, das an Übertragungsbedingungen angepasst ist, **dadurch gekennzeichnet, dass** die Verarbeitungseinheit aufweist:
- Einrichtungen zur Erfassung (301) einer Konfigurationsänderung im Bereich mindestens einer Austauschschnittstelle von Daten in Form von Leitungen;
- Einrichtungen zur Einfügung (303) in einen Rahmen, der die Daten in Form von Leitungen verkettet und für das Modem bestimmt ist, einer Signalisierungsinformation, die für eine Änderungsanforderung der Bandbreitenaufteilung zwischen den Daten in Form von Leitungen und den Daten in Form von Paketen repräsentativ ist;
und angewendet bei Empfang (304) einer positiven Antwort auf die Anforderung:
- Einrichtungen zur Neukonfiguration (305) des Modems unter Beibehaltung des Codier- und Modulationsschemas und unter Angabe einer Übertragungsrate von Daten in Form von Leitungen, die abhängig von der erfassten Konfigurationsänderung definiert wird.

10. Integrierte Schaltung, **dadurch gekennzeichnet, dass** sie eine Verarbeitungseinheit nach Anspruch 9 aufweist.

## Claims

1. Method for managing bandwidth distribution on a transmission medium between data in circuit form and data in packet form, a processing unit (110) supplying said data in circuit form to a modem (111) which manages the transmissions on said medium and is dynamically configurable to carry out on said medium a framing, multiplexing, coding and modulation scheme adapted to transmission conditions, **characterised in that** the processing unit carries out the following steps:
- detection (301) of a configuration change at the level of at least one exchange interface of data in circuit form;
- insertion (303) into a frame, concatenating said data in circuit form and bound for the modem, signalling information representative of a request for a change of bandwidth distribution between said data in circuit form and said data in packet form;
and, upon receipt (304) of a positive response to said request:
- reconfiguration (305) of the modem while preserving the coding and modulation scheme and while declaring a flow of data in circuit form that is defined as a function of said detected configuration change.

2. Method according to claim 1, **characterised in that** said detection of a configuration change consists in detecting a stop or a start of activity in at least one data circuit received *via* said interface.

3. Method according to claim 1, **characterised in that** said detection of a configuration change consists in receiving from a configurator a new configuration to apply.

4. Method according to any one of claims 1 to 3, **characterised in that**, upon receipt of a negative response to said request, the processing unit carries out the following steps:
- activation (307) of a random delay;
- repetition (303) of said insertion of the signalling information when said delay has 1passed without a request for change of bandwidth distribution between said data in circuit form and said data in packet form being received following the negative response.

5. Method according to any one of claims 1 to 4, **characterised in that** the processing unit carries out the following steps:
- receipt of information, coming from said modem, representative of a time at which said modem takes into account said reconfiguration;
- application of a new frame scheme for the concatenation of the data in circuit form, as a function of said time at which said modem takes into account said reconfiguration.

6. Method according to any one of claims 1 to 4, **characterised in that** the processing unit carries out the following step:
- configuration of a size of a buffer memory through which the data in circuit form pass, on the basis of a look-up table between the applied framing, multiplexing, coding and modulation scheme applied and the size of the buffer memory, in order to ensure that said data pass through according to a predetermined latency.

7. Computer program, **characterised in that** it includes instructions for carrying out, by a processing unit, the method according to any one of claims 1 to 6, when said program is executed by a processor of said processing unit.

8. Storage means, **characterised in that** they store a computer program including instructions for carrying out, by a processing unit, the method according to any one of claims 1 to 6, when said program is executed by a processor of said processing unit.

9. Processing unit (110) for managing bandwidth distribution on a transmission medium between data in circuit form and data in packet form, the processing unit being adapted to provide said data in circuit form to a modem (111) which manages the transmissions on said medium and is dynamically configurable to carry out on said medium a framing, multiplexing, coding and modulation scheme adapted to transmission conditions, **characterised in that** the processing unit comprises:
- means for detection (301) of a configuration change at the level of at least one exchange interface of data in circuit form;
- means for insertion (303) into a frame, concatenating said data in circuit form and bound for the modem, signalling information representative of a request for a change of bandwidth distribution between said data in circuit form and said data in packet form;
and implemented upon receipt (304) of a positive response to said request:
- means for reconfiguration (305) of the modem while preserving the coding and modulation scheme and while declaring a flow of data in circuit form that is defined as a function of said detected configuration change.

10. Integrated circuit, **characterised in that** it comprises a processing unit according to claim 9.
